(19) Europäisches Patentamt
European Patent Office
Office européen des brevets

(11) EP 2 096 199 A1

(12) EUROPEAN PATENT APPLICATION
published in accordance with Art. 153(4) EPC

(43) Date of publication:
**02.09.2009 Bulletin 2009/36**

(21) Application number: **07859910.7**

(22) Date of filing: **14.12.2007**

(51) Int Cl.:
***D01F 6/60*** *(2006.01)* ***C08G 69/32*** *(2006.01)*
***C08G 73/18*** *(2006.01)*

(86) International application number:
**PCT/JP2007/074585**

(87) International publication number:
**WO 2008/075751 (26.06.2008 Gazette 2008/26)**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **15.12.2006 JP 2006338283**
**15.12.2006 JP 2006338284**

(71) Applicant: **Teijin Techno Products Limited**
**Osaka-shi, Osaka 541-0054 (JP)**

(72) Inventors:
- **ISHIHARA, Shigeru**
  **Matsuyama-shi**
  **Ehime 791-8041 (JP)**
- **MARUMOTO, Yasuhiro**
  **Iwakuni-shi**
  **Yamaguchi 740-0014 (JP)**
- **WADA, Noriko**
  **Ibaraki-shi**
  **Osaka 567-0006 (JP)**
- **IZAWA, Hajime**
  **Ibaraki-shi**
  **Osaka 567-0006 (JP)**
- **OZAKI, Hiromi**
  **Ibaraki-shi**
  **Osaka 567-0006 (JP)**

(74) Representative: **Hallybone, Huw George et al**
**Carpmaels & Ransford**
**43-45 Bloomsbury Square**
**London WC1A 2RA (GB)**

# (54) HETEROCYCLIC RING-CONTAINING AROMATIC POLYAMIDE FIBER, METHOD FOR PRODUCING THE SAME, FABRIC COMPRISING THE FIBER, FIBER-REINFORCED COMPOSITE MATERIAL REINFORCED WITH THE FIBER

(57) The heterocycle-containing aromatic polyamide fibers of the invention are excellent in balance among mechanical characteristics, particularly balance among a tensile strength, an initial modulus and a strength in the direction perpendicular to the fiber axis, exhibit a high strength holding ratio under heat and humidity, and are excellent in flame retardancy, bulletproofness and cutting resistance, as compared to conventional aromatic polyamide fibers, and therefore can be favorably used in fields where severe mechanical characteristics and stability to environmental variation.

Accordingly, the heterocycle-containing aromatic polyamide fibers of the invention can be favorably used, for example, in fields including a protective equipment, such as a helmet, a bulletproof vest and the like, a chassis for an automobile, a ship and the like, an electric insulating material, such as a printed circuit board and the like, and other various fields.

EP 2 096 199 A1

## Description

TECHNICAL FIELD

The present invention relates to heterocycle-containing aromatic polyamide fibers, a method for producing the same, a cloth constituted by the fibers, and a fiber-reinforced composite material reinforced with the fibers. More specifically, it relates to aromatic polyamide fibers that are excellent in balance among mechanical characteristics, particularly balance among a tensile strength, an initial modulus and a strength in the direction perpendicular to the fiber axis, and exhibit a high strength holding ratio under heat and humidity, as compared to conventional aromatic polyamide fibers, a method for producing the same, a cloth constituted by the fibers excellent in flame retardancy and bulletproofness, and a fiber-reinforced composite material reinforced with the fibers thereby being improved in reinforcing effect as much as possible.

BACKGROUND ART

Aromatic polyamide fibers containing an aromatic dicarboxylic acid component and an aromatic diamine component have been widely used for industrial purposes and clothing purposes by using the characteristics thereof including strength, high elastic modulus and high heat resistance. In particular, para-series aromatic polyamide fibers (which may be hereinafter referred to as para-aramid fibers) are widely used for a protective clothing purpose, such as working wear, working glove and the like, a friction material, such as a brake pad for a vehicle and the like, a reinforcing material for tire or optical fibers, and the like, owing to their high rigidity, high heat resistance and excellent wear resistance.

Representative examples of the para-series aromatic polyamide fibers include poly-p-phenyleneterephthalamide (PPTA) fibers, and the fibers have many advantages. However, there are points that are necessarily improved, for example, they involve problems in a spinning process since they are produced by a so-called liquid crystal spinning method utilizing optical anisotropy of a polymer dope, they are not necessarily high in strength among the mechanical characteristics of the fibers, they are insufficient in ductility due to low extension, they are insufficient in strength in the direction perpendicular to the fiber axis.

Under the circumstances, such aromatic polyamide fibers have been proposed that are improved in mechanical characteristics by introducing a heterocycle-containing monomer while maintaining the optical anisotropy (see, for example, JP-A-51-8363 and the like).

Such aromatic copolyamide fibers have been developed that have high solubility to a known amide solvent to facilitate spinning thereof, and have a high tensile strength and a high initial modulus.

For example, JP-A-7-300534, JP-A-278303 and CN 14733969A propose an aromatic copolyamide that contains a heterocycle-containing monomer as a repeating unit and can form an isotropic solution with an amide solvent. The aromatic copolyamide can be easily formed into fibers, thereby providing fibers that have a high tensile strength and a high initial modulus as compared to the conventional products.

Furthermore, the para-series aromatic polyamide fibers are excellent in flame retardancy as compared to the conventional clothing fibers, such as nylon, polyester and the like, as understood from the LOI (limiting oxygen index) thereof of 29. However, there is strong demand for para-series aromatic polyamide fibers that are further enhanced in flame retardancy owing to increasing demand for capability thereof in various fields including fire retardant curtain for hospital or the like, a seat cover for aircraft, and the like.

Various proposals have been made for a method for providing flame retardant aromatic polyamide fibers. For example, JP-B-55-51069proposes a method, in which meta-aramid fibers, which are represented by poly-m-phenyleneisophthalamide fibers, are heat-treated with an aromatic amine and then treated with a halogen-substituted phosphazene or the like to impart flame retardancy.

In the method, however, the flame retarder is not necessarily fixed sufficiently to a para-aramid, which has higher crystallinity than a meta-aramid, and thus flame retardant para-aramid fibers having durability cannot be obtained. A method of mixed spinning meta-aramid fibers and para-aramid fibers as disclosed in JP-A-1-221537 (Patent Document 2), a method of using a woven fabric of flame retardant wool fibers and para-aramid fibers in a two-layer structure as disclosed in JP-A-3-837, and the like have been attempted, but a product that have sufficient capability has not yet been obtained. Furthermore, as shown in JP-A-7-197317, a method of enhancing flame retardancy by adding a flame retarder upon spinning para-aramid fibers is attempted, but the method is restricted in selection of the flame retarder, and moreover, fibers having sufficient strength cannot be obtained.

Such flame retardant cloth and clothing have been proposed that uses polybenzazole fibers having higher flame retardancy than aramid fibers for enhancing the flame retardancy. Although the flame retardancy is enhanced by using the fibers, the fibers are considerably expensive, and therefore the cloth and clothing using the fibers are also expensive.

As having been described, there is a demand for a cloth that is inexpensive as equivalent to the case using

conventional para-aramid fibers, and is improved in flame retardancy, bulletproofness, cutting resistance and reinforcement of a resin, as compared to the case using conventional para-aramid fibers.

DISCLOSURE OF THE INVENTION

An object of the invention is to provide aromatic polyamide fibers that are excellent in balance among mechanical characteristics, particularly balance among a tensile strength, an initial modulus and a strength in the direction perpendicular to the fiber axis, and exhibit a high strength holding ratio under heat and humidity, as compared to conventional aromatic polyamide fibers, and a method for producing aromatic polyamide fibers that is capable of producing the same stably.

As a result of earnest investigations for achieving the object by the inventors, it has been found that an oriented thread, which is spun from a dope of a heterocycle-containing aromatic polyamide and is stretched after spinning, is heat-treated in a non-oxygen atmosphere or a low oxygen atmosphere, thereby providing aromatic polyamide fibers that are excellent in balance among a tensile strength, an initial modulus and a strength in the direction perpendicular to the fiber axis, and exhibit a high strength holding ratio under heat and humidity, and thus the invention has been completed.

Accordingly, the invention provides:

(1) Heterocycle-containing aromatic polyamide fibers containing a heterocycle-containing aromatic polyamide, **characterized in that** the fibers have a tensile strength of 20 cN/dtex or more, an initial modulus of 500 cN/dtex or more and a sulfuric acid soluble amount of 45% or less according to the following measuring method. Measuring Method for Sulfuric Acid Soluble Amount

The heterocycle-containing aromatic polyamide fibers are added to concentrated sulfuric acid having a concentration of 97% to make a concentration of the heterocycle-containing aromatic polyamide fibers of 10 mg/10 mL and dissolved therein at 20°C for 24 hours to provide a solution, which is measured for molecular weight distribution and a peak area (P1) by size exclusion chromatography (produced by Spark Holland B.V.). The heterocycle-containing aromatic polyamide before forming fibers is similarly measured for molecular weight distribution and a peak area (P0) under the same conditions. A value calculated from the resulting P1 and P0 according to the following expression is designated as a sulfuric acid soluble amount.

$$\text{Sulfuric acid soluble amount (\%)} = (P1)/(P0) \times 100$$

(2) A method for producing heterocycle-containing aromatic polyamide fibers that are spun from a dope of a heterocycle-containing aromatic polyamide, **characterized in that** after stretching, the fibers are heat-treated under conditions of an oxygen amount of 1% by volume or less and a thread tension upon heat treatment exceeding 1.0 cN/tex.

(3) A heterocycle-containing aromatic polyamide fiber cloth excellent in flame retardancy, bulletproofness and cutting resistance, containing heterocycle-containing aromatic polyamide fibers, **characterized in that** the heterocycle-containing aromatic polyamide fibers are the heterocycle-containing aromatic polyamide fibers as described in the item (1).

(4) A fiber-reinforced composite material containing heterocycle-containing aromatic polyamide fibers and a matrix resin, **characterized in that** a content of the matrix resin is from 30 to 70% by mass based on the total amount of the composite material, and the heterocycle-containing aromatic polyamide fibers are the heterocycle-containing aromatic polyamide fibers as described in the item (1).

BEST MODE FOR CARRYING OUT THE INVENTION

Embodiments of the invention will be described in detail below.

Heterocycle-containing Aromatic Polyamide Fibers

The heterocycle-containing aromatic polyamide fibers of the invention are fibers that are produced from a heterocycle-containing aromatic polyamide-containing dope and have the following specific properties. The properties, the constitution, the production method and the like of the heterocycle-containing aromatic polyamide fibers of the invention will be described below.

Properties of Heterocycle-containing Aromatic Polyamide Fibers

Tensile Strength

The tensile strength of the heterocycle-containing aromatic polyamide fibers of the invention is 20 cN/dtex or more, preferably 25 cN/dtex or more, and more preferably 30 cN/dtex or more. In the case where the tensile strength is less than 20 cN/dtex, sufficient reinforcing effect may not be exhibited upon using as reinforcing fiber for a composite material.

The "tensile strength" in the invention is a value obtained by performing a tensile test according to the method disclosed in JIS L1013. Initial Modulus

The initial modulus of the heterocycle-containing aromatic polyamide fibers of the invention is 500 cN/dtex or more, preferably 600 cN/dtex or more, and more preferably 850 cN/dtex or more. In the case where the initial modulus is less than 500 cN/dtex, sufficient reinforcing effect may not be exhibited upon using as reinforcing fiber for a composite material.

The "initial modulus" in the invention is a value obtained by performing a tensile test according to the method disclosed in JIS L1013. Sulfuric Acid Soluble Amount

The sulfuric acid soluble amount of the heterocycle-containing aromatic polyamide fibers of the invention by the following measuring method is 45% or less. In the case where the sulfuric acid soluble amount exceeds 45%, the crosslinked structure, which is considered to be ascribable to hydrogen bond and covalent bond, is not sufficiently formed, and thus the tensile strength and the initial modulus are not improved.

However, it is not preferred that the crosslinked structure is excessively formed since the mutual action among molecular chains is too strong, and fuzz and monofilament breakage are liable to occur in a yarn-making step.

Measuring Method for Sulfuric Acid Soluble Amount

The heterocycle-containing aromatic polyamide fibers are added to concentrated sulfuric acid having a concentration of 97% to make a concentration of the heterocycle-containing aromatic polyamide fibers of 10 mg/10 mL and dissolved therein at 20°C for 24 hours to provide a solution, which is measured for molecular weight distribution and a peak area (P1) by size exclusion chromatography (produced by Spark Holland B.V.). The heterocycle-containing aromatic polyamide before forming fibers is similarly measured for molecular weight distribution and a peak area (P0) under the same conditions. A value calculated from the resulting P1 and P0 according to the following expression is designated as a sulfuric acid soluble amount.

$$\text{Sulfuric acid soluble amount (\%)} = (P1)/(P0) \times 100$$

A fraction that is insoluble in sulfuric acid is an insoluble fraction owing to crosslinking of molecular chains, which is considered to be ascribable to hydrogen bond and covalent bond. Accordingly, a small sulfuric acid soluble amount means a large fraction of molecular chains that are crosslinked and thus means a large strength in the direction perpendicular to the fiber axis. However, even when the sulfuric acid soluble amount is too smaller, the strength in the direction perpendicular to the fiber axis is not increased as proportional to the value as long as the sulfuric acid soluble amount is 45% or less, and therefore, the tensile strength and the initial modulus may not be necessarily improved. Tensile Strength Holding Ratio

The tensile strength holding ratio of the heterocycle-containing aromatic polyamide fibers of the invention after exposing to an atmosphere of a temperature of 37°C and a relative humidity of 95% for 1,400 hours is 90% or more, preferably 95% or more, and more preferably 99% or more. The tensile strength holding ratio is not preferably less than 90% since in the case, for example, where a bulletproof cloth is formed therefrom and used under a high heat and humidity environment, the strength of the cloth is decreased.

The "tensile strength holding ratio" in the invention is a value obtained by the following measuring method.

Measuring Method for Tensile Strength Holding Ratio

The heterocycle-containing aromatic polyamide fibers of the invention after exposing to an atmosphere of a temperature of 37°C and a relative humidity of 95% for 1,400 hours are measured for tensile strength (St1) according to the method disclosed in JIS L1013, and a value calculated from St1 and the tensile strength (St0) before the heat treatment according to the following expression is designated as a strength holding ratio.

$$\text{Strength holding ratio (\%)} = (St1)/(St0) \times 100$$

Constitution of Heterocycle-containing Aromatic Polyamide

The heterocycle-containing aromatic polyamide referred in the invention is a polymer having one kind or two or more kinds of divalent aromatic groups that are directly bonded through an amide bond and containing a heterocycle. The position of the heterocycle contained is not particularly limited and may be any of the main chain or the side chain, and the heterocycle may form an aromatic group along with the aromatic ring. The aromatic group includes one containing two aromatic rings that are bonded through oxygen, sulfur or an alkylene group, and one containing two aromatic rings that are bonded directly. Furthermore, the divalent aromatic group may contain a lower alkyl group, such as a methyl group, an ethyl group and the like, a methoxy group, a halogen group, such as a chlorine group and the like, and the like. The position of the amide bond that directly bonds the divalent aromatic groups is not limited, and may be any one of a para-type and a meta-type.

Raw Materials for Heterocycle-containing Aromatic Polyamide

The heterocycle-containing aromatic polyamide used in the invention can be obtained by using an aromatic dicarboxylic acid chloride and an aromatic diamine as raw materials and reacting them. In the heterocycle-containing aromatic polyamide used in the invention, a heterocycle-containing compound is used as a part of the aromatic diamine to introduce a heterocycle. Aromatic Dicarboxylic Acid

The aromatic dicarboxylic acid chloride used as a raw material for the heterocycle-containing aromatic polyamide used in the invention is not particularly limited, and ordinarily known ones may be used. Examples of the aromatic dicarboxylic acid chloride include terephthalic acid dichloride, 2-chloroterephthalic acid dichloride, 3-methylterephthalic acid dichloride, 4,4'-biphenyldicarboxylic acid dichloride, 2,6-naphthalenedicarboxylic acid dichloride, isophthalic acid dichloride and the like. Aromatic Diamine

The aromatic diamine used as a raw material for the heterocycle-containing aromatic polyamide used in the invention is preferably, as a part or entire component thereof, a heterocycle-containing compound. In the case where the component is partly a heterocycle-containing compound, for example, it is preferred that two kinds of aromatic diamines are used, and one of them is a heterocycle-containing aromatic diamine.

The aromatic diamine that does not contain a heterocycle is preferably one selected from a para-type aromatic diamine since it is excellent in mechanical characteristics of fibers obtained, and the aromatic ring thereof may be substituted or may not be substituted. As the aromatic diamine that does not contain a heterocycle, ordinarily known ones, such as p-phenylenediamine, p-biphenylenediamine and the like, may be used.

The aromatic diamine containing a heterocycle is not particularly limited, one selected from an aromatic diamine compound having a substituted or unsubstituted phenylbenzimidazole skeleton is preferred since the crosslinked structure, which is considered to be ascribable to hydrogen bond, is formed sufficiently. Among these, 5(6)-amino-2-(4-aminophenyl)benzimidazole is preferably used since it is excellent in availability, tensile strength of fibers obtained, initial modulus and the like.

Structural Repeating Unit of Heterocycle-containing Aromatic Polyamide

The heterocycle-containing aromatic polyamide used in the invention preferably contains the structural repeating unit represented by the following formula (1) in an amount of from 30 to 100% by mol based on the total amount of the repeating units. In the case where the content of the structural repeating unit represented by the formula (1) is less than 30% by mol, the reaction solution is turbid in polymerization reaction, and a turbid dope is necessarily spun in the subsequent spinning step, thereby making spinning difficult. The content of the structural repeating unit represented by the formula (1) is preferably from 50 to 100% by mol.

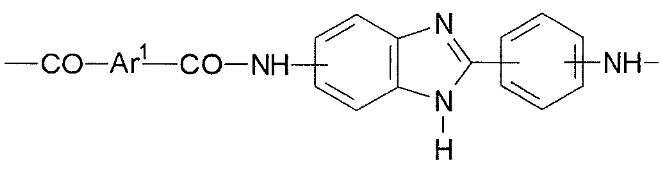

(1)

(In the formula, $Ar^1$ represents a divalent aromatic residual group, and hydrogen of the aromatic ring thereof may be partly or entirely substituted by a lower alkyl group, a methoxy group or a halogen group.)

In the heterocycle-containing aromatic polyamide as a raw material of reinforcing fibers used in the invention, examples of the other structural repeating unit than the structural repeating unit represented by the formula (1) include a structural repeating unit represented by the following formula (2). The content of the structural repeating unit represented by the formula (2) may be the entire of the balance of the structural repeating unit represented by the formula (1) or may be a part of the balance.

$$-CO-Ar^2-CO-NH-Ar^3-NH- \qquad (2)$$

(In the formula, Ar2 and Ar3 may be the same as or different from each other and each represent an unsubstituted or substituent-containing divalent aromatic residual group.)

Production Method of Heterocycle-containing Aromatic Polyamide

The heterocycle-containing aromatic polyamide used in the invention can be produced according to a method that has been known in the art. Specifically, examples of the method include a method of reacting an aromatic dicarboxylic acid chloride and an aromatic diamine in an amide polar solvent.

Examples of the amide polar solvent used in production of the heterocycle-containing aromatic polyamide include N,N-dimethylformamide, N,N-dimethylacetamide, N-methyl-2-pyrrolidone, dimethylimidazolidinone and the like. Among these, N-methyl-2-pyrrolidone is preferably used since it is excellent in handleability and stability in a series of steps of from polymerization of the heterocycle-containing aromatic polyamide to preparation of a dope and wet spinning step, and is less toxic as a solvent.

In the invention, a known inorganic salt is preferably added in a suitable amount for the purpose of enhancing the solubility of the heterocycle-containing aromatic polyamide in the amide polar solvent. The time for adding the inorganic salt is not particularly limited, and it may be added at arbitrary time, such as before starting polymerization, during or after polymerization, and the like. Examples of the inorganic salt that may be added include lithium chloride, calcium chloride and the like. The addition amount thereof is preferably in a range of from 3 to 10% by mass based on the amide polar solvent. The addition amount exceeding 10% by mass is not preferred since it is difficult to dissolve the total amount of the inorganic salt in the amide polar solvent. The addition amount less than 3% by mass is not preferred since the solubility of the heterocycle-containing aromatic polyamide not sufficiently enhanced.

After completing the reaction, a basic inorganic compound, such as sodium hydroxide, potassium hydroxide, calcium hydroxide, calcium oxide and the like, is preferably added to perform neutralization reaction.

The concentration of the polymer produced by the polymerization reaction in the amide polar solvent is important for providing a homogeneous polymer having a high polymerization degree. The concentration of the polymer produced is preferably 10% by mass or less, and in particular, in the case where the concentration is in a range of from 3 to 8% by mass, a homogeneous polymer having a high polymerization degree can be provided stably.

Production Method of Heterocycle-containing Aromatic Polyamide Fibers

The heterocycle-containing aromatic polyamide fibers of the invention are produced by using a dope containing the heterocycle-containing aromatic polyamide obtained in the aforementioned production method through a spinning step, a stretching step and a heat-treating step described below.

Spinning Step

In the spinning step, the heterocycle-containing aromatic polyamide-containing dope is ejected from a discharging hole provided in a die into a coagulation bath to provide an unstretched thread.

The heterocycle-containing aromatic polyamide-containing dope used in the invention may be a solution that contains the heterocycle-containing aromatic polyamide produced in the aforementioned production method of a heterocycle-containing aromatic polyamide dissolved in the solvent for producing in the method, or the heterocycle-containing aromatic polyamide in the form of particles or the like separated may be dissolved in a solvent to provide a solution, which may be used as the dope. Among these, a solution containing the heterocycle-containing aromatic polyamide dissolved in the solvent that has been used as the production solvent is preferably used as it is as the dope since the separating step of the heterocycle-containing aromatic polyamide can be omitted.

For the purpose of imparting functionality or the like to the fibers, other arbitrary component, such as an additive and the like, may be introduced upon preparing the dope in such a range that does not deviate from the substance of the invention. The introducing method is not particularly limited, and for example, the arbitrary component may be

introduced to the dope by using a extruder, a mixer or the like.

In the spinning step, the heterocycle-containing aromatic polyamide-containing dope is discharged in a coagulation solution according to the known production method for aromatic polyamide fibers to provide an unstretched thread. The coagulation solution used herein is an aqueous solution constituted by two components including an amide solvent and water. The amide solvent used is preferably N-methyl-2-pyrrolidone since it is excellent in handleability and stability and is less toxic as a solvent.

The concentration of the amide solvent in the coagulation solution is preferably from 10 to 50% by mass. In the case where the concentration of the amide solvent exceeds 50% by mass, coagulation of the heterocycle-containing aromatic polyamide dope does not proceed to cause adhesion between the unstretched threads obtained, thereby making continuous spinning difficult. The concentration is not preferably less than 10% by mass since plasticization of the unstretched thread does not proceed sufficiently, thereby decreasing the stretching property in the stretching step performed subsequently.

The temperature of the coagulation bath is preferably selected appropriately depending on the coagulation bath since the temperature closely relates to the composition of the coagulation bath, and the temperature is not preferably too high since the resulting unstretched threads are significantly adhered to each other, and the workability is deteriorated. The temperature of the coagulation bath is suitably in a range of from 0 to 50°C.

Stretching Step

In the stretching step, the unstretched thread obtained in the spinning step is stretched to provide an oriented thread.

In the stretching step, the unstretched thread of the heterocycle-containing aromatic polyamide formed in the coagulation bath in the spinning step is taken out from the coagulation bath. Thereafter, the unstretched thread thus taken out is transported to an aqueous solution for stretching containing two components including an amide solvent and water, and is stretched in the aqueous solution to a ratio of from 1.2 to 5.0 times to provide an oriented thread. The amide solvent used is preferably N-methyl-2-pyrrolidone since it is excellent in handleability and stability and is less toxic as a solvent.

The concentration of the amide solvent in the aqueous solution for stretching is preferably in a range of from 30 to 80% by mass. In the case where the concentration of the amide solvent exceeds 80% by mass, the heterocycle-containing aromatic polyamide thread is dissolved in the aqueous solution for stretching, thereby making continuous formation of the oriented thread difficult. In the case where the concentration of the amide solvent is less than 30% by mass, plasticization of the resulting oriented thread does not proceed sufficiently, and thus it is difficult to ensure the aforementioned stretching ratio.

The temperature of the aqueous solution for stretching is not particularly limited, and in the case where the temperature is too high, the heterocycle-containing aromatic polyamide threads are significantly adhered to each other, and the workability is deteriorated. The temperature of the aqueous solution for stretching is preferably in a range of from 0 to 50°C.

Water Washing Step and Drying Step

After performing the stretching step, a water washing step and a drying step are performed as preliminary procedures toward a heat-treating step. In the water washing step, the aqueous solution for stretching is sufficiently removed from the resulting heterocycle-containing aromatic polyamide oriented thread by washing with water. Subsequently, the oriented thread, from which the aqueous solution for stretching has been removed, is sufficiently dried in the drying step for preparing for the subsequent heat-treating step.

Heat-treating Step

In the heat-treating step, the oriented thread thus obtained is heat-treated in a non-oxygen atmosphere or a low oxygen atmosphere having an oxygen concentration of 1% by volume or less to provide heterocycle-containing aromatic polyamide fibers.

As the oxygen concentration upon heat treatment, a non-oxygen atmosphere or a low oxygen atmosphere having an oxygen concentration of 1% by volume or less is employed. The oxygen concentration is preferably 0.5% by volume or less, and more preferably 0.2% by volume or less. In the case where the oxygen concentration exceeds 1% by volume upon heat treatment, decomposition of the polymer chain is accelerated, whereby it is difficult to attain balance between high strength of the fibers and strength in the direction perpendicular to the fiber axis.

The heat-treating temperature in the heat-treating step is preferably in a range of from 300 to 550°C. In the case where the heat-treating temperature is less than 300°C, sufficient orientation crystallization cannot be achieved,

whereby it is difficult to provide fibers having sufficient tensile strength and initial modulus. Furthermore, crosslinking cannot be sufficiently formed, whereby it is difficult to provide strength in the direction perpendicular to the fiber axis. In the case where the heat-treating temperature exceeds 550°C, on the other hand, the fibers suffer heat deterioration, whereby it is difficult to provide sufficient tensile strength and initial modulus.

The heat-treating time in the heat-treating step is preferably 1 minute or less. In the case where the heat-treating time exceeds 1 minute, decomposition of the polymer chain is accelerated, whereby it is difficult to provide fibers having high strength.

The tension of the fibers upon heat-treating is preferably more than 1.0 cN/tex and 3.0 cN/tex or less. In the case where the tension is 1.0 cN/tex or less, sufficient molecular chain orientation cannot be obtained, whereby it is difficult to attain high strength. In the case where the tension exceeds 3.0 cN/tex, on the other hand, fuzz frequently occurs on the fibers, which may provides cases where fibers with good quality are difficult to provide.

The fineness of the heterocycle-containing aromatic polyamide oriented thread subjected to the heat-treating step is preferably in a range of from 0.55 to 22 dtex, and particularly preferably in a range of from 1.67 to 16.7 dtex, in terms of monofilament fineness. The monofilament fineness is not preferably less than 0.55 dtex since fuzz and monofilament breakage are liable to occur in a yarn-making step of the fibers obtained. It preferably does not exceed 22 dtex since thread twisting or net manufacture is difficult to perform.

Production and Purpose of Flame Retardant Cloth

The thread of the flame retardant heterocycle-containing aromatic polyamide fibers thus produced in the aforementioned manner is subjected to thread twisting, crimping and the like depending on necessity, and then formed into a cloth, such as a knitted fabric, a woven fabric, a nonwoven fabric and the like, according to a known method. The cloth exhibits a considerably high LOI (limiting oxygen index) of 32 or more, and preferably from 32 to 42, in a flame retardation test according to the method of JIS K7201.

The flame retardant aromatic copolyamide fiber cloth is laminated into plural layers in many cases and used as a laminate, and in the laminate, the aromatic copolyamide fiber cloth may be used solely or may be used in combination with another high strength fiber cloth. In this case, it is necessary that the high strength fiber cloth to be used in combination is a cloth of fibers having a tensile strength of 20 cN/dtex or more, such as other aramid fibers, polyarylate fibers, polybenzazole fibers and the like.

The flame retardant cloth of the invention not only is useful as a material for a flame retardant clothing, such as aerospace clothing, military clothing, turnout closing for security personnel, fire fighting clothing for fire brigade personnel, work clothing used in front of a blast furnace, and the like, but also can be effectively used in the fields including fire retardant and flame retardant curtain, a seat for aircrafts and automobiles, and the like. In these cases, a small amount of electroconductive fibers may be mixed and woven in the cloth to prevent static charge from occurring.

Production and Purpose of Bulletproof Cloth

The thread of the heterocycle-containing aromatic polyamide fibers produced in the aforementioned method is subjected to thread twisting, crimping and the like depending on necessity, and then formed into a bulletproof cloth, such as a knitted fabric, a woven fabric, a nonwoven fabric and the like, according to a known method. In the case where the cloth is a woven fabric among these, the fibers are aligned in one direction each for warp and weft threads to facilitate exhibition of the capabilities of the fibers, and thus high bulletproof capability is liable to be attained. Furthermore, the form of the woven structure can be easily maintained to prevent the texture from opening. Accordingly, it is preferred since the fibers are not deviated upon bullet landing, and the capabilities of the fibers are not lost to exhibit high bulletproof capability.

The highly bulletproof heterocycle-containing aromatic polyamide fiber cloth is used as a laminate after laminating, and the laminate may be used solely or may be used in combination with another high strength fiber cloth. The high strength fiber cloth used in combination is preferably a cloth of fibers having a tensile strength of 18 cN/dtex or more, such as other aramid fibers, polyarylate fibers, high strength polyethylene fibers and the like.

Production and Purpose of Cutting Resistant Cloth

The thread of the heterocycle-containing aromatic polyamide fibers produced in the aforementioned method is subjected to thread twisting, crimping and the like depending on necessity, and then formed into a cutting resistant cloth, such as a knitted fabric, a woven fabric, a nonwoven fabric and the like, according to a known method. In this case, a composite cloth having other fibers combined is also encompassed in the scope of the invention. The other fibers herein include natural fibers, organic fibers, inorganic fibers, metallic fibers, mineral fibers and the like. The combining method is not particularly limited, and an arbitrary method may be used, such as mixed weaving, combined knitting and weaving and the like.

The woven fabric may be a plane woven fabric, a double woven fabric, a ripstop fabric and the like, and the

knitted fabric may be a circular knitted fabric, a weft knitted fabric, a warp knitted fabric, a raschel knitted fabric and the like. The nonwoven fabric may be any one of a nonwoven fabric containing short fibers and a nonwoven fabric containing long fibers. The short fiber nonwoven fabric may be a dry-laid nonwoven fabric or a wet-laid nonwoven fabric (including paper), and the long fiber nonwoven fabric may be a so-called spunbond nonwoven fabric or a tow filamentized nonwoven fabric, and may be a fabric containing long fibers aligned in one direction to form a sheet, which is laminated with other plural aligned fiber sheets to cross the aligned directions each other. If necessary, fibers of these nonwoven fabrics may be bonded to each other by using an adhesive or a thermal-bonding fiber in combination. The nonwoven fabric may be subjected to a confounding treatment by a needle punch or a water jet.

The fiber bundle constituting the cloth is not particularly limited. Specifically, a monofilament, a multifilament, a twisted yarn, a mixed twisted yarn, a covering yarn, a spun yarn, a stretch breaking spun yarn, a core-shell structure yarn and the like may be used.

The cutting resistant cloth of the invention may be used partly or entirely in protective clothing or armors.

Matrix Resin

The matrix resin, which is an essential component used for the case where the thread of the heterocycle-containing aromatic polyamide fibers produced in the aforementioned method is used as reinforcing fibers for a fiber-reinforced composite material, is not particularly limited as far as it can be composited with the heterocycle-containing aromatic polyamide fibers, and any one of a thermoplastic resin and a thermosetting resin may be used. Examples of the thermoplastic resin include a polyethylene resin, a polypropylene resin, a polyamide resin, a polyester resin, a polycarbonate resin, a polyphenylenesulfide resin, a polyether ether ketone resin and the like. Examples of the thermosetting resin include a phenol resin, a diallyl phthalate resin, an unsaturated polyester resin, an epoxy resin, a polyimide resin, a vinyl ester resin and the like.

The content of the matrix resin is in a range of from 30 to 70% by mass based on the total composite material. In the case where the content of the matrix resin is less than 30% by mass, it is difficult to produce a fiber-reinforced composite material containing the heterocycle-containing aromatic polyamide fibers that are dispersed homogeneously in the matrix resin. In the case where the content of the matrix resin exceeds 70% by mass, the fiber reinforcement effect of the resulting fiber-reinforced composite material is considerably lowered.

Other Components

In the fiber-reinforced composite material of the invention, other arbitrary components may be introduced for the purpose of imparting functionality or the like in such a range that does not deviate from the substance of the invention. Upon introducing, known methods may be used, and examples thereof include a method, in which the arbitrary component is dispersed in the matrix resin in advance, and the matrix resin is then composited with the heterocycle-containing aromatic polyamide fibers.

Production Method of Fiber-reinforced Composite Material

The production method of the fiber-reinforced composite material of the invention is not particularly limited, and may be selected from known methods depending on the target shape and the kind of the matrix resin. In the invention, an optimum production method may be selected, for example, from a hand lay-up method, a cold press method, a resin injection method, a BMC method, an SMC method and the like.

EXAMPLES

The invention will be described in more detail with reference to examples and comparative examples, but the invention is not limited to them as far as they deviate from the substance of the invention.

Measurement and Evaluation Methods

In the examples and the comparative examples, the following items were measured and evaluated in the following manners.

Inherent Viscosity (ηinh)

The measurement was performed at 30°C with 98% concentrated sulfuric acid as a solvent to measure the inherent viscosity.

Oxygen Concentration upon Heat Treatment

It was measured with an oxygen concentration measuring device (TM-3500) produced by Terucom Co., Ltd.

Tensile Strength and Initial Modulus

The tensile strength and the initial modulus were calculated by performing a tensile test according to the method disclosed in JIS L1013.

Tensile Strength Holding Ratio

The heterocycle-containing aromatic polyamide fibers after exposing to an atmosphere of a temperature of 37°C and a relative humidity of 95% for 1,400 hours were measured for tensile strength (St1) according to the method disclosed in JIS L1013, and the tensile strength holding ratio was calculated from St1 and the tensile strength (St0) before the heat treatment according to the following expression.

$$\text{Strength holding ratio (\%)} = (St1)/(St0) \times 100$$

Sulfuric Acid Soluble Amount

The heterocycle-containing aromatic polyamide fibers were added to concentrated sulfuric acid having a concentration of 97% to make a concentration of the heterocycle-containing aromatic polyamide fibers of 10 mg/10 mL and dissolved therein at 20°C for 24 hours to provide a solution, which was measured for molecular weight distribution and a peak area (P1) by size exclusion chromatography (produced by Spark Holland B.V.). The heterocycle-containing aromatic polyamide before forming fibers was similarly measured for molecular weight distribution and a peak area (P0) under the same conditions. A value calculated from the resulting P1 and P0 according to the following expression was designated as a sulfuric acid soluble amount.

$$\text{Sulfuric acid soluble amount (\%)} = (P1)/(P0) \times 100$$

Flame Retardancy

The LOI (limiting oxygen index) was calculated by performing a flame retardancy test according to the method of JIS L7201.

Bulletproofness

The V50 value according to MIL-C-44050 (U.S. Military Specification) was used as an index of bulletproofness.

Cutting Resistance

A 10 cm square frame (width: 1 cm, outer size: 11 × 11 cm, inner size: 10 × 10 cm) was fixed at an angle of 45°, to which a cloth to be tested was fixed. A crosshead having a circular cutter blade (produced by Olfa Corporation, diameter: 20 mm) attached to the tip thereof was brought down thereon, and the maximum resistance force until one line of the threads constituting the cloth was cut was measured.

Example 1

Production of Heterocycle-containing Aromatic Polyamide

1.940 L of N-methyl-2-pyrrolidone (NMP) was placed in an agitation vessel equipped with agitation blades having nitrogen flowing inside. 60.0 g of calcium chloride having been sufficiently dried was placed therein and dissolved. Subsequently, 11.0 g (30% by mol) of p-phenylenediamine (PPD) and 53.0 g (70% by mol) of 5(6)-amino-2-(4-aminophenyl)benzimidazole (DAPBI) were respectively weighed, placed therein and dissolved. Subsequently, 68.6 g (100%

by mol) of terephthalic acid chloride (TDC) was placed therein and reacted to provide a heterocycle-containing aromatic polyamide solution. 110.0 g of an NMP solution containing 22.5% by weight of calcium hydroxide was added to the resulting heterocycle-containing aromatic polyamide solution to perform neutralizing reaction.

The heterocycle-containing aromatic polyamide deposited from the polyamide solution obtained after the neutralizing reaction was measured for inherent viscosity (ηinh), which was 5.5.

Spinning Step

The heterocycle-containing aromatic polyamide solution obtained after the neutralizing reaction was used as a dope and discharged from a spinning die having a hole diameter of 0.15 mm and a number of holes of 25 at a rate of 2.5 cc per minute, thereby spinning through a gap part referred to as an air gap into an NMP aqueous solution (coagulation solution) having an NMP concentration of 30% at 50°C to provide an unstretched thread (coagulated thread).

Stretching Step

The resulting unstretched thread was plastically stretched at a stretching ratio of 2.0 in an NMP aqueous solution (aqueous solution for stretching) having an NMP concentration of 70% at 30°C.

Heat-treating Step

The thread after stretching was washed with water, dried, and then subjected to a heat treatment under conditions of a temperature of 450°C and an oxygen concentration of 0.2% by volume for 30 seconds. After the heat treatment, the thread was wound up at a rate of 30.0 m/min to provide heterocycle-containing aromatic polyamide fibers of 42 dtex per 25 fil. Measurement and Evaluation of Heterocycle-containing Aromatic Polyamide Fibers

The resulting heterocycle-containing aromatic polyamide fibers were subjected to various measurements by the aforementioned measuring methods. The results are shown in Table 1.

Examples 2 to 3 and Comparative Examples 1 to 4

Production of Heterocycle-containing Aromatic Polyamide Fibers

Heterocycle-containing aromatic copolyamide fibers were produced in the same manner as in Example 1 except that heterocycle-containing aromatic polyamide were produced in the same manner as in Example 1, and the heat-treating conditions were those shown in Table 1. The resulting heterocycle-containing aromatic polyamide fibers were subjected to various measurements in the same manner as in Example 1. The results are shown in Table 1.

Table 1

| | Example 1 | Example 2 | Example 3 |
|---|---|---|---|
| DAPBI (% by mol) | 70 | 70 | 70 |
| PPD (% by mol) | 30 | 30 | 30 |
| TDC (% by mol) | 100 | 100 | 100 |
| Oxygen concentration upon heat treatment (% by volume) | 0.2 | 0.2 | 5 |
| Heat treatment temperature (°C) | 450 | 420 | 420 |
| Heat treatment time (min) | 0.5 | 1.0 | 0.5 |
| Sulfuric acid soluble amount (%) | 40 | 3 | 10 |
| Tensile strength holding ratio under heat and humidity after 1,400 hours (%) | 99 | 99 | 95 |
| Fineness (dtex) | 42 | 42 | 42 |
| Tensile strength (cN/dtex) | 36 | 35 | 34 |
| Breaking elongation (%) | 3.6 | 3.4 | 3.2 |
| Initial modulus (cN/dtex) | 950 | 900 | 850 |

DAPBI: 5(6)-amino-2-(4-aminophenyl)benzimidazole

PPD: p-phenylenediamine

TDC: terephthalic acid chloride

Table 1 (continued)

| | Comparative Example 1 | Comparative Example 2 | Comparative Example 3 | Comparative Example 4 |
|---|---|---|---|---|
| DAPBI (% by mol) | 70 | 70 | 70 | 70 |
| PPD (% by mol) | 30 | 30 | 30 | 30 |
| TDC (% by mol) | 100 | 100 | 100 | 100 |
| Oxygen concentration upon heat treatment (% by volume) | 21 | 8 | 21 | 10 |
| Heat treatment temperature (°C) | 450 | 450 | 280 | 560 |
| Heat treatment time (min) | 0.5 | 3.0 | 10.0 | 1.5 |
| Sulfuric acid soluble amount (%) | 60 | 2 | 45 | 2 |
| Tensile strength holding ratio under heat and humidity after 1,400 hours (%) | 98 | 89 | 80 | 80 |
| Fineness (dtex) | 42 | 42 | 42 | 42 |
| Tensile strength (cN/dtex) | 19 | 18 | 15 | 18 |
| Breaking elongation (%) | 2.8 | 2.5 | 2.0 | 2.2 |
| Initial modulus (cN/dtex) | 700 | 750 | 400 | 450 |

DAPBI: 5(6)-amino-2-(4-aminophenyl)benzimidazole

PPD: p-phenylenediamine

TDC: terephthalic acid chloride

Example 4

Heterocycle-containing aromatic polyamide fibers obtained in the same manner as in Example 1 were combined to provide a filament yarn of 1,176 dtex.

The filament yarn was twisted at a twisting coefficient of 6, and woven at a weave density of 45 per inch for each of warp and weft to provide a plane woven fabric having an areal weight of 210 g/m$^2$.

The woven fabric had an LOI (limiting oxygen index) of 32 measured according to the method of JIS K7201.

Example 5

24 sheets of the plane woven fabric produced in Example 4 were laminated to provide a bulletproof woven fabric. A bulletproofness test of the bulletproof woven fabric revealed V50 of 580 m/s.

Comparative Example 5

Poly-p-phenyleneterephthalamide (PPTA) fibers of 1,100 dtex (Kevlar, a trade name, produced by DuPont) were twisted at a twisting coefficient of 7.6, and woven at a weave density of 30 per inch for each of warp and weft to provide a plane woven fabric having an areal weight of 285 g/m$^2$. 18 sheets of the woven fabric were laminated, and the same bulletproofness test thereof revealed V50 of 494 m/s.

Example 6

A spun yarn (thread size: 20/2) was produced by an ordinary method with heterocycle-containing aromatic polyamide fibers obtained in the same manner as in Example 1, and the spun yarn were used as warp and weft to weave a 2/1 twill fabric (areal weight: 280 g/$m^2$).
The measurement of cutting resistance of the twill fabric revealed good cutting resistance of 1.3 kg.

Comparative Example 6

The same procedures as in Example 6 were performed except that the fibers constituting the spun yarn in Example 6 were poly-p-phenyleneterephthalamide (PPTA) fibers (Kevlar, a trade name, produced by DuPont).
The resulting twill fabric had cutting resistance of 0.7 kg.

## Claims

1. Heterocycle-containing aromatic polyamide fibers comprising a heterocycle-containing aromatic polyamide, **characterized in that** the fibers have a tensile strength of 20 cN/dtex or more, an initial modulus of 500 cN/dtex or more and a sulfuric acid soluble amount of 45% or less according to the following measuring method.
Measuring Method for Sulfuric Acid Soluble Amount
The heterocycle-containing aromatic polyamide fibers are added to concentrated sulfuric acid having a concentration of 97% to make a concentration of the heterocycle-containing aromatic polyamide fibers of 10 mg/10 mL and dissolved therein at 20°C for 24 hours to provide a solution, which is measured for molecular weight distribution and a peak area (P1) by size exclusion chromatography (produced by Spark Holland B.V.). The heterocycle-containing aromatic polyamide before forming fibers is similarly measured for molecular weight distribution and a peak area (P0) under the same conditions. A value calculated from the resulting P1 and P0 according to the following expression is designated as a sulfuric acid soluble amount.

$$\text{Sulfuric acid soluble amount (\%)} = (P1)/(P0) \times 100$$

2. Heterocycle-containing aromatic polyamide fibers having a tensile strength holding ratio of 90% or more after exposing to an atmosphere of a temperature of 37°C and a relative humidity of 95% for 1,400 hours.

3. The heterocycle-containing aromatic polyamide fibers as claimed in claim 1, wherein the heterocycle-containing aromatic polyamide fibers contain a structural repeating unit represented by the following formula (1) in an amount of from 30 to 100% by mol based on the total amount of the repeating units:

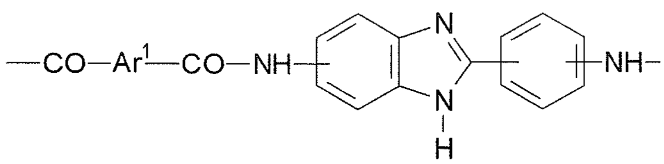

(1)

(wherein $Ar^1$ represents a divalent aromatic residual group, and hydrogen of the aromatic ring thereof may be partly or entirely substituted by a lower alkyl group, a methoxy group or a halogen group).

4. A method for producing heterocycle-containing aromatic polyamide fibers that are spun from a dope of a heterocycle-containing aromatic polyamide, **characterized in that** after stretching, the fibers are heat-treated under conditions of an oxygen amount of 1% by volume or less and a thread tension upon heat treatment exceeding 1.0 cN/tex.

5. The method for producing heterocycle-containing aromatic polyamide fibers as claimed in claim 4, wherein the heterocycle-containing aromatic polyamide fibers contain a structural repeating unit represented by the following formula (1) in an amount of from 30 to 100% by mol based on the total amount of the repeating units:

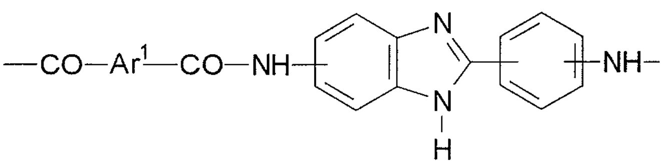

(1)

(wherein $Ar^1$ represents a divalent aromatic residual group, and hydrogen of the aromatic ring thereof may be partly or entirely substituted by a lower alkyl group, a methoxy group or a halogen group).

**6.** The method for producing heterocycle-containing aromatic polyamide fibers as claimed in claim 4 or 5, wherein the heat-treating temperature is from ranging from 300 to 550°C.

**7.** The method for producing heterocycle-containing aromatic polyamide fibers as claimed in claim 4 or 5, wherein the heat-treating time is from ranging from 1 to 60 seconds.

**8.** A heterocycle-containing aromatic polyamide fiber cloth excellent in flame retardancy, comprising heterocycle-containing aromatic polyamide fibers, **characterized in that** the heterocycle-containing aromatic polyamide fibers are the heterocycle-containing aromatic polyamide fibers as claimed in one of claims 1 to 3.

**9.** The heterocycle-containing aromatic polyamide fiber cloth excellent in flame retardancy as claimed in claim 8, wherein the cloth has a limiting oxygen index (LOI) of 32 or more.

**10.** A heterocycle-containing aromatic polyamide fiber cloth excellent in bulletproofness, comprising heterocycle-containing aromatic polyamide fibers, **characterized in that** the heterocycle-containing aromatic polyamide fibers are the heterocycle-containing aromatic polyamide fibers as claimed in one of claims 1 to 3.

**11.** A heterocycle-containing aromatic polyamide fiber cloth excellent in cutting resistance, comprising heterocycle-containing aromatic polyamide fibers, **characterized in that** the heterocycle-containing aromatic polyamide fibers are the heterocycle-containing aromatic polyamide fibers as claimed in one of claims 1 to 3.

**12.** A fiber-reinforced composite material comprising heterocycle-containing aromatic polyamide fibers and a matrix resin, **characterized in that** a content of the matrix resin is ranging from 30 to 70% by mass based on the total amount of the composite material, and the heterocycle-containing aromatic polyamide fibers are the heterocycle-containing aromatic polyamide fibers as claimed in one of claims 1 to 3.

**INTERNATIONAL SEARCH REPORT**

International application No.
PCT/JP2007/074585

A. CLASSIFICATION OF SUBJECT MATTER
*D01F6/60*(2006.01)i, *C08G69/32*(2006.01)i, *C08G73/18*(2006.01)i

According to International Patent Classification (IPC) or to both national classification and IPC

B. FIELDS SEARCHED

Minimum documentation searched (classification system followed by classification symbols)
D01F1/00-6/96, C08G69/32

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| P,A | WO 2008/012925 A1 (TEIJIN TECHNO PRODUCTS LTD.), 31 January, 2008 (31.01.08), Whole document (Family: none) | 1-12 |
| P,A | JP 2007-154328 A (TEIJIN TECHNO PRODUCTS LTD.), 21 June, 2007 (21.06.07), Full text (Family: none) | 1-12 |
| P,A | JP 2007-154329 A (TEIJIN TECHNO PRODUCTS LTD.), 21 June, 2007 (21.06.07), Full text (Family: none) | 1-12 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 07 February, 2008 (07.02.08) | 19 February, 2008 (19.02.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.
PCT/JP2007/074585

C (Continuation). DOCUMENTS CONSIDERED TO BE RELEVANT

| Category* | Citation of document, with indication, where appropriate, of the relevant passages | Relevant to claim No. |
|---|---|---|
| A | JP 7-300534 A (Hoechst AG.),<br>14 November, 1995 (14.11.95),<br>Claims 1, 9, 13; Par. Nos. [0018], [0020];<br>examples 8 to 11, 14, 15<br>& US 5646234 A1 & EP 695776 A2<br>& DE 4411755 A | 1-12 |
| A | JP 7-278303 A (Hoechst AG.),<br>24 October, 1995 (24.10.95),<br>Claim 1; examples 3 to 10, 12<br>& US 5571891 A1 & EP 678539 A2<br>& DE 4411757 A & DE 4421885 A<br>& IL 113243 A | 1-12 |
| A | JP 7-150413 A (Hoechst AG.),<br>13 June, 1995 (13.06.95),<br>Full text<br>& US 5698324 A & EP 647731 A1<br>& DE 4334004 A | 1-12 |
| A | US 5738940 A (Hoechst Trevira GmbH & Co., KG.),<br>14 April, 1998 (14.04.98),<br>Claim 7<br>& EP 790335 A1 | 1-12 |
| A | JP 56-312 A (Teijin Ltd.),<br>06 January, 1981 (06.01.81),<br>Claim 4<br>(Family: none) | 1-3,8-12 |
| A | JP 60-17113 A (Teijin Ltd.),<br>29 January, 1985 (29.01.85),<br>Page 4, upper right column, line 3 to the last line<br>(Family: none) | 4-7 |

Form PCT/ISA/210 (continuation of second sheet) (April 2007)

**INTERNATIONAL SEARCH REPORT**

International application No.
PCT/JP2007/074585

The invention of claims 1 and 2 includes every heterocyclic ring-containing aromatic polyamide fiber having a desired property as a physical property related to strength, modulus and the like. However, what is disclosed within the meaning of PCT Article 5 is only a substance which includes a subordinate concept unit of a specific formula (1) described in the specification and is obtained by a specific heat treatment or the like, and claims 1 and 2 lack the support within the meaning of PCT Article 6.

Form PCT/ISA/210 (extra sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 51008363 A
- JP 7300534 A
- JP 278303 A
- CN 14733969 A
- JP 55051069 B
- JP 1221537 A
- JP 3000837 A
- JP 7197317 A